# EUROPEAN PATENT APPLICATION

(11) **EP 3 792 335 A1**
(43) Date of publication of application: **17.03.2021**
(21) Application number: 20194751.2
(22) Date of filing: 07.09.2020
(51) Int. Cl.: C10B 1/04, B01J 19/00, F16J 12/00

(54) **DELAYED COKER DRUM AND ASSEMBLY METHOD**

(30) Priority: 10.09.2019 IT 201900015956
(71) Applicant: Walter Tosto S.p.A., 66100 Chieti Scalo (CH) (IT)
(72) Inventor: MOZZARDI, Fabrizio, 66100 CHIETI SCALO (IT); TOSTO, Luca, 66100 CHIETI SCALO (IT)
(74) Representative: Tiburzi, Andrea

(57) **Abstract**

Described is a reaction chamber (100) configured to house coking reactions comprising a main body (90) with a base portion (B) and a head portion (S), wherein the base portion (B) and the head portion (S) are joined together at their respective joint edges, characterised in that the walls of the main body (90) are made of stainless steel in such a way as to allow a joint between the base portion (B) and the head portion (S), of the main body (90), by welding only the base sheet since no plating is present on the sheet itself and in such a way as to allow the construction of the base portion (B) and the head portion (S), when constructed by coupling and welding a plurality of sheets, by welding only the base sheet since no plating is present on the sheet itself.

Advantageously, the method of assembly of the reaction chamber (100) according to the invention limits the operations necessary to weld only the base sheet since there is no plating on the sheet itself.

## Description

### Technical field

This invention refers to a hydrocarbon thermal cracking reaction chamber and a method of manufacturing the chamber itself, in particular a chamber used for the thermal cracking of heavy oil residues.

More specifically, the invention relates to the structure of a coking reaction chamber and a method of construction of the chamber itself which guarantees a reduction in the time and costs of set-up, construction, commissioning and maintenance.

### Background art

Coking is a thermal cracking process in which an oil processing residue of low commercial value, such as atmospheric or vacuum distillation residue, is converted into higher quality distillate products as well as petroleum gas and coke; this allows the refinery to reduce the production of low commercial value fuel oil.

Delayed coking is a semi-continuous process; whilst, in fact, the coking is a continuous process, the removal, handling and disposal of the coke are conducted discontinuously. The charge is heated up to reaction temperature in a furnace and then transferred to the reaction chambers (coke drums) which are usually installed in the plant in a vertical position on a supporting "skirt".

The coking reaction is delayed until the heated charge is transferred to the reaction chambers, where the residence time is long enough for the reactions to be completed. The coke is deposited in the chamber, while the cracking vapours leave the chamber head and enter the downstream fractionation column.

The term 'delayed' is attributed to the fact that the coking reaction is delayed until the heated charge is transferred to the appropriate reaction chambers (coke drums), where the necessary residence time for the coking reactions is provided.

The coking process in the coke drums can be divided into a number of phases including steam-out, heating, heating with vapours from the adjacent coke drum, introduction of the charge to be processed, coking, steam stripping, water hardening, un-heading, drilling and reheading. The unit normally takes the same time for coking and decoking with the total cycle time varying between 18 and 36 hours. The "decoking" cycle of the unit is normally defined as the time between the steam exit and the passage to the next coke drum, which varies from 9 to 18 hours, depending on the type of coke and equipment. However, with today's trends, the drive is for higher production volumes leading to shorter and more frequent unit cycles. Decoking and coking cycles of 9-12 hours are currently in use. Shorter cycles result in more thermal cycles per year. In addition, these shorter cycles can cause higher thermal stresses on the coke drum membranes.

Coke drums are therefore subject to high temperature cyclic loading and the coke drums themselves are therefore designed in creep and fatigue mode.

The outer walls of the chambers of known type are made of carbon or low alloy steel C-1/2 Mo, 1Cr-0.5Mo, 1,25Cr0.5Mo, or also 2.25Cr1Mo.

Low alloy materials are used as they can guarantee high mechanical resistance values (yield strength) at the high temperatures at which the coke drum is operated during the processing of oil waste.

The drawback of using carbon steels or C-1/2 Mo is that if they are used for long periods at high temperatures, for example, temperatures above 450 °C, they give rise to graphitisation and/or spheroidisation phenomena of the internal structure of the material.

Such phenomena can lead to a loss of mechanical strength at high temperatures and therefore represent a potential risk for the use of such materials for the sound construction of coke drums walls.

High reaction temperatures also lead to corrosion phenomena.

For this reason, the coking reaction chambers of known type are made using plated sheets, that is to say, obtained from the coupling by co-lamination (that is, rolling in a steel mill of two superimposed sheets) or by explosion (that is, coupling of two different superimposed sheets obtained by generating a strong contact pressure between the two mentioned sheets by means of an explosive charge) between at least two different materials by providing for the inside of the walls a layer generally made of stainless steel sheet of low thickness generally 3-5 mm having the function of anti-corrosion coating and to prevent sulfation at high temperatures.

The most commonly used plating material, that is to say, inner lining material, is stainless steel type 410S. There are, however, a minimum number of coke drums coated with type 405 stainless steel. Both steels contain a nominal chromium of 12% by weight to resist sulfation and have a specified low carbon level which allows the coating to be restored without heat treatment.

The reaction chambers of known type are therefore made by means of welded joints of plated sheets (plated sheets as defined in the previous paragraphs)
The following description will use the term sheet metal to mean a sheet metal element used as a base material for the construction of reaction chambers; the term sheet or sheet metal is therefore used interchangeably to mean the same element.

Plated sheets are formed from a base sheet of carbon or low alloy steel coated with a corrosion resistant sheet, the plating is done by co-laminating in steelworks or by explosion.

Base sheets have the function of resisting the mechanical stresses which occur during the working life of the coke drum, the generally low thickness sheet of stainless steel with which the base plate is coated has the function of protecting the base material from corrosion due to the products contained in the coke drum itself during its working life.

The inner anti-corrosion coating or plating of the base plate has no structural function, that is, it is not considered as a participant in the mechanical resistance of the coke drum walls.

The use of plated sheets for the construction of a reaction chamber for coking reactions has a number of drawbacks.

A first drawback is that the reaction chambers require frequent maintenance during their service life.

The plated material used for prior art reaction chambers is a non-homogeneous material as it is formed by the bonding of two distinct materials, the base material (low alloy steel) and the coating material (generally stainless steel in the case of coke drums); moreover the plating restoration in the welded joint areas of the base plate (that is, the restoration of the continuity of the internal anti-corrosion coating) is generally carried out with a third material (that is, a different material from the base plate and the plating) and it is generally a nickel alloy; these three materials (carbon steel base material or low alloy, anti-corrosion coating generally stainless steel and nickel alloy for the restoration of the continuity of the anti-corrosion layer), although they have expansion coefficients which are not very different from each other are however subject to differential thermal expansion especially in consideration of their high operating temperatures and therefore undergo tensile loads due to the above-mentioned expansion and the high cyclical load which over time favours the detachment of the anti-corrosion coating from the base sheet. This detachment of the anti-corrosion material, that is, the plating, must obviously be repaired in order to ensure corrosion resistance and to prevent cracking on the base material due to corrosion of the same base material which is no longer "protected" by the anti-corrosion coating.

Such repairs involve stopping the system to make the necessary repairs.

Any intervention to restore the state of the coating and the cracks which arise from the detachment of the plating involves the need to stop the plant for several days with consequent maintenance costs related to the down-time of the plant itself.

In addition, the plating restoration during maintenance is, as mentioned above, carried out by depositing filler material consisting of a third material which is generally a nickel alloy that is a very expensive material (the nickel alloy which is obviously a different material from the base material or plating material with which the walls of the coke drum itself are produced).

A delay in repairing cracks in the anti-corrosion coating, that is, of the plating during operation, can lead to corrosion of the base plates due to direct contact of the hydrocarbons with the base material, which can lead over time to cracks and failure in the base material itself.

The low alloy steels which are used in the prior art as a base material for the walls of the reaction chamber have high yield strength and reduced ductility compared to carbon steel and are therefore more resistant to the phenomenon of bulging (swelling or non-elastic deformation of the walls of the coke drum, a phenomenon which occurs in coke drums after a certain number of loading cycles in operation), but these steels tend to be more susceptible to the onset and propagation of cracks - for example due to a corrosive phenomenon from inside the chamber - precisely because of the high yield strength and low ductility which can cause fractures of the walls of the reaction chamber and unwanted leakage of oil derivatives being processed by the plant itself.

A further drawback of the prior art is related to the method of construction of the coke drums-using plated sheets for the construction of the coke drum walls.

In fact, the prior art construction methods involve the need to carry out non-destructive tests and additional machining on the welded joints and on the restoration of the plating material which slow down the above mentioned welding operations between the plated sheets.

Some of the above mentioned non-destructive tests are preventive, that is, they must be carried out before welding operations. In order to verify the absence of detachment of the plating material, that is to say, corrosion resistant, from the base material (disbonding), a check must be carried out on the plating sheets using ultrasound probes. This non-destructive testing of the plated sheets involves a cost both in terms of manpower and time.

In order to proceed with the welding of plated sheets, a preliminary operation must be carried out to remove the plating on the edges of the plated sheet by milling or grinding at the edges which must be welded.

A non-destructive test is then carried out to verify the total removal of the plating material at the edges of the base material which must be welded; in fact it is not possible to weld plated sheets without first removing the plating from the edges to be welded because if the plated sheets are welded by means of an electric arc without removing the plating there would be, during the welding operation, the fusion of base material, plating material and filler material resulting in a melting bath with chemical-physical characteristics not controllable and therefore with mechanical strength and corrosion resistance characteristics not suitable for the intended use of the walls of the coke drum. After the welding of the base material, in the areas where the plating had previously been removed, operations are carried out to restore the continuity of the anti-corrosion material.

The restoration of the plating in the joint areas of the base material is carried out by means of an electrical deposition process (submerged arc or electroslag) of coating metal (generally a nickel alloy for the coke drums) on the base material (weld overlay).

Therefore, the manufacture of a reaction chamber of known type involves the control and verification operations, the removal and restoration of the plating material at the circumferential and longitudinal welds of the sheets forming the sheeting, the welds of the plates forming the bottoms and the internal areas of the openings (connections of the coke drum to the external pipes for the inlet and outlet of reaction products, instrumentation, etc.) and the components obtained by forging ingots which cannot be plated either by co-lamination or by explosion, such as for example the connection of the ring (when present and having a Y-section) between the support skirt, the reactor bottom and the reactor plating.

The construction of the reaction chambers using plated sheet metal has the drawback not only of the cost of the nickel alloy used for the restoration operations, but also of the labour and assembly time costs which are considerable.

A further drawback of reaction chambers of known type is that, in addition to the construction time, the procurement times for plated sheets are also high.

The plated material is generally produced by co-lamination or explosion bonding.

These plating operations are carried out either directly by the steelworks producing the base material or by companies specialised in explosion plating and require very long execution times. For example, under current market conditions, a plated steel may have delivery times ranging from 4 months to 12 months from the date of the purchase order, depending of course on the workload of the production steelworks or explosion plating companies and the quantity required.

For this reason, the production of reaction chambers using plated sheet may require long construction times due to the delivery of the construction material and may cause possible economic losses to the customer due to long construction times for the reaction chambers themselves and consequently for the production plant where the coke drums are installed.

A further drawback is that, in a prior art reaction chamber built using plated sheet, both during the assembly and manufacturing phases in the workshop and after a repair in the plant (refinery), a post-welding stress relief heat treatment must be carried out on each repair weld carried out.

This heat treatment on the welded joints is generally carried out in a furnace by the manufacturer during the manufacture of the coke drums and is performed in a localized manner (that is, by heat treatment with electrical heating bands only in the area where the welding has been carried out) by the operator/user of coke drums in the refinery after a possible repair by welding cracks on the base material due to the operation.

Post-welding heat treatment is prescribed by the various design standards of pressure equipment (ASME VIII, EN 13445, AD Merkblatter etc.) depending on the construction material and the thickness of the welded joint. This is to avoid the accumulation of residual stresses in the welding process, which would be added to the stresses due to operating loads.

For coke drums made of "carbon steel" or "low alloy steel" base material, the heat treatment is generally always prescribed by the above-mentioned standards.

Disadvantageously, carrying out a stress relieving heat treatment after welding during manufacture results in increased costs and production time for coke drums, postponing the plant start-up time and consequently causing losses for the refinery which can operate the equipment at a later date.

Disadvantageously, also carrying out a localised heat treatment for stress relief in the refinery after a crack repair by welding increases the operating costs of coke drums and also leads to increased downtime causing losses for the coke drum operator in the refinery who can only operate the equipment at a later date.

For this reason, disadvantageously, a prior art reaction chamber, that is, built with base plates made of low alloy with or without plating material has non-homogeneous mechanical characteristics between the various parts as some parts of the coke drum undergo repairs by welding and consequently heat treatment and other parts of the coke drum do not undergo repairs and consequently do not undergo heat treatment causing non-homogeneous mechanical characteristics between the areas which undergo more heat treatments and areas that undergo fewer heat treatments.

Incidentally, the high homogeneous nature and uniformity of the mechanical characteristics of the material with which a coke drum is made is a sought-after feature since the coke drum itself, as it is subject to high load cycles during its operation, tends to form cracks in the areas with greater non-homogeneousness of the material because accumulation and intensification of stresses are triggered in these areas.

In fact, the same heat treatments accentuate the non-homogeneousness of the mechanical characteristics between the various parts of the coke drum (that is, parts which have undergone more heat treatments and parts which have undergone fewer) and therefore favour the fatigue failure mechanisms.

The disadvantages listed above are particularly relevant in the reference sector and are also amplified by the fact that current market requirements are aimed at obtaining higher production volumes which result in shorter and more frequent unit cycles and therefore greater susceptibility of the coke drums themselves to any type of non-homogeneousness and uniformity, both geometric and in terms of materials.

A processing cycle usually lasts between 18 and 36 hours per unit of charge treated.

However, today's production demands lead to ever-increasing production volumes resulting in shorter and more frequent unit cycles, with a duration of approximately 9-12 hours per unit of charge treated.

The above-mentioned phenomena are therefore becoming more and more frequent, the walls of the coking reaction chambers are subject to increasing thermal stresses caused by shorter working cycles, and an equally frequent need for maintenance is required.

### Disclosure of the invention

For this reason, the technical problem posed and solved by the invention is to provide a reaction chamber for coking reactions which overcomes the drawbacks of the prior art described above (that is, coke drums made of carbon steel base material or low alloy coated with plating material), allowing the manufacturing time of the reaction chambers themselves to be reduced and minimising the need and the maintenance time during the operation of the plant and minimising downtime for assembly or repair operations.

This problem is overcome by a reaction chamber according to claim 1 and a manufacturing method according to claim 10.

Preferred features of the invention are present in the respective dependent claims.

This invention has some significant advantages.

In particular, the invention allows the need for maintenance of a reaction chamber during the operation of an oil processing plant to be minimised.

In fact, the specific structure of the reaction chamber advantageously makes it possible to uniform the stresses on the different portions which make up the chamber itself and to reduce the formation of cracks due to stress concentrations which occur when using non-homogeneous materials such as plated sheets or nickel alloys for repairing plating.

The absence of a coating layer on the internal walls of the chamber makes it possible to minimise the occurrence of localised stresses due to contact between materials with different levels of thermal expansion.

Moreover, according to the invention, the joint between the various portions which make up the reaction chamber is executed by welding using a single material (that is to say, a material having the same chemical composition apart from the tolerances allowed by the various reference standards), preferably the same material used to make the walls of the chamber itself.

For this reason, advantageously, the welding operations are carried out faster than the welding of plated sheets and the manufacturing method, which is also the object of the invention, makes it possible to minimise not only the reaction chamber manufacturing time but also the plant downtimes required to carry out maintenance and/or repair operations.

A further advantage of the invention is that the material used for manufacturing the reaction chamber has a high ductility value and is therefore able to contain, and avoid, the propagation of any cracks compared to the low alloy plated carbon steel material which is currently used in the prior art.

A further advantage is that the invention makes it possible to eliminate the non-destructive testing required when using plated sheets for the manufacturing and machining on the machine tools to be carried out on the edges of the plated sheets before welding, thus reducing costs, not only in terms of machining time, but also in terms of skilled labour involved in the assembly or maintenance.

Other advantages, features and the means of use of the invention will become clear from the following detailed description of some embodiments, provided by way of example and without limiting the scope of the invention.

### Description of the drawings

Reference will be made to the accompanying drawings, in which:
Figure 1 shows a front view of an embodiment of the reaction chamber according to the invention in an operational configuration;
Figures 2-4 show front views of the main portions of the reaction chamber of Figure 1;
Figure 5 shows a front view of an element of the reaction chamber of Figure 1;
Figure 5a shows an enlarged detail of Figure 5;
Figure 6 shows a partially exploded front view of the reaction chamber of Figure 1 in an assembly configuration;
Figure 7a shows a schematic sequence of the welding phases between portions of a prior art reaction chamber;
Figure 7b shows a schematic sequence of the welding phases between portions of a reaction chamber, assembled according to an embodiment of the method according to the invention;

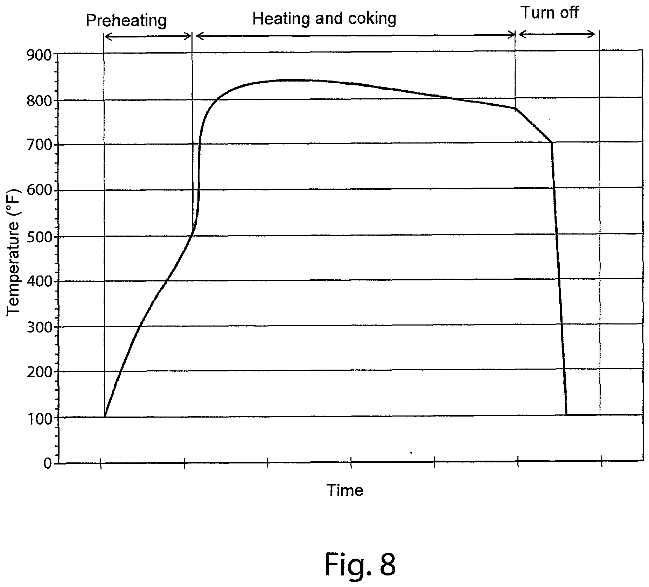

Figure 8 shows a graphical representation of the temperature trend as a function of time during a coking and decoking cycle.

The similar parts will be indicated in the various drawings with the same numerical references.

### Detailed description of preferred embodiments

A reaction chamber according to a first embodiment of the invention is denoted in its entirety with the numeral 100.

The reaction chamber according to the invention is configured to house coking reactions and comprises a main body 90 having a base portion B and a head portion S.

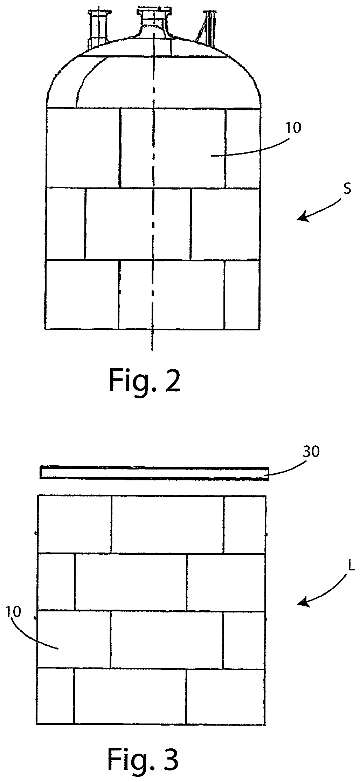

As shown in figure 2, the head portion S has a substantially cylindrical shape and is delimited at the top by a closing cap.

The closing cap also has an outlet connection or opening for the escape of cracking vapours from the head of the reaction chamber to be further processed in the processing plant, for example, to be conveyed to a fractionating column located downstream of the reaction chamber.

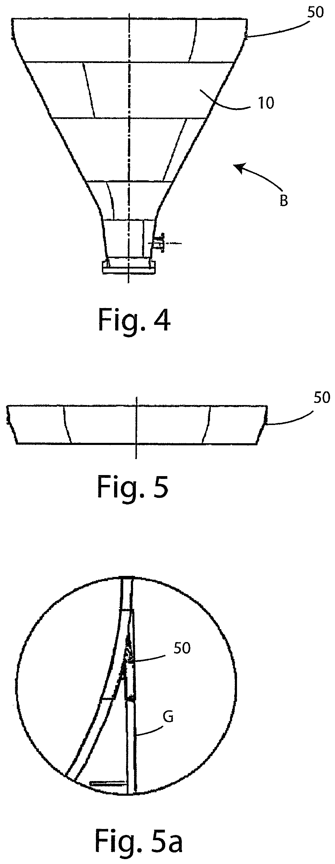

As shown in Figure 4, the base portion B has a conical shape to convey the reaction products, in particular petroleum coke.

In a configuration not shown in the drawings, the base portion B and the head portion S are joined together at the respective junction edges.

Advantageously, the walls of the main body 90 are made of integral non-plated stainless steel (Martensitic, Ferritic, Austenitic or Austenitic-Ferritic, the so-called duplex) in such a way as to allow a joint between the base portion B and the said head portion S and between the sheets making up the portions B and S by welding sheets in the longitudinal and circumferential direction by welding only the base sheet since there is no plating on the sheet itself and in particular by using a single welding material (that is, a material with the same chemical composition apart from the tolerances allowed by the various reference standards), since the anti-corrosion layer does not have to be restored if the plated sheet is used.

Preferably, the stainless steel used for making the walls of the main body 90, is Martensitic steel S.S. 410S or S.S. 405S, which has a lower thermal expansion than austenitic stainless steel and comparable to carbon steel.

Advantageously, the same stainless steel used to make the walls of the main body 90, is used to make the welding lines between the joined portions.

In alternative embodiments, stainless steel with a balanced percentage of ferritic and austenitic steel (so-called Duplex steel) is used for the walls of the main body 90.

The use of stainless steel advantageously guarantees a high ductility value, thus being able to contain and avoid the propagation of any cracks.

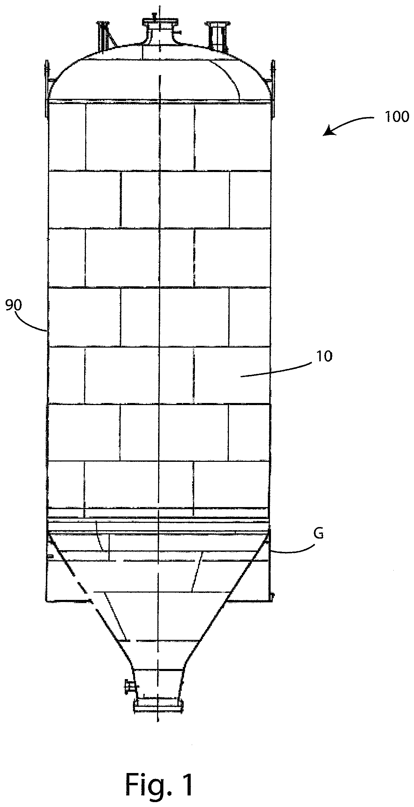

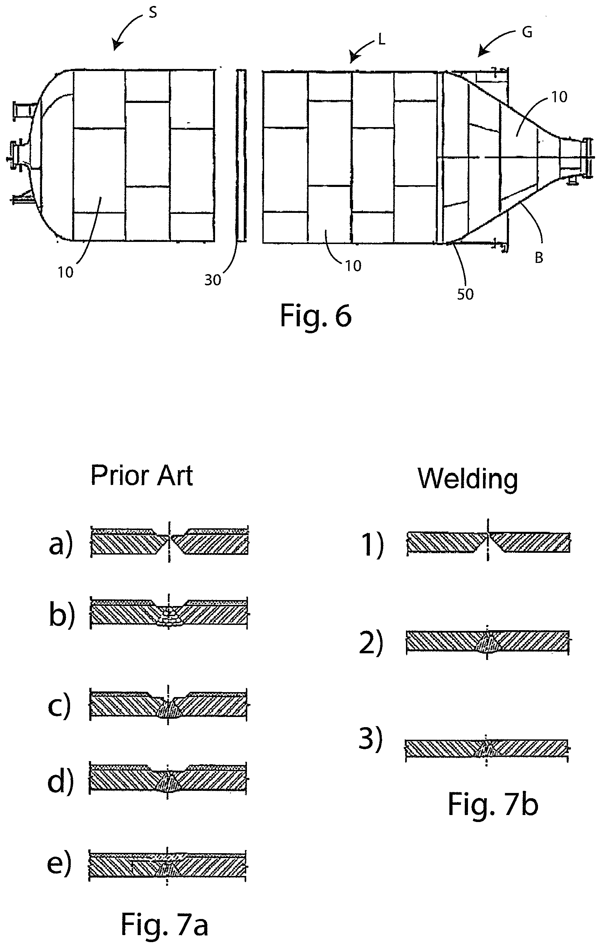

In the preferred embodiment shown in Figures 1 and 6, the main body 90 of the reaction chamber 100 according to the invention, comprises a substantially cylindrical lateral casing L, positioned between the base portion B and the head portion S

In particular, the lateral casing L is shaped in a substantially cylindrical manner and is joined to both the base portion B and the head portion S by means of respective welding lines.

In view of its considerable overall size, each part of the main body 90 mentioned above comprises a plurality of substantially rectangular sheets 10.

For example, the lateral casing L, the base portion B and the head portion S are all are made from a plurality of sheets 10 which are joined together by a respective welding line at each edge line.

The construction of the plating of the coke drum is generally made by coupling several plates both laterally to form a single skirt and by coupling several skirts to complete an entire plating.

To allow the reaction chamber 100 to be anchored to the ground or to a support structure in an operating condition, for example shown in Figure 1, where the reaction chamber is positioned along a direction substantially vertical to the ground, a cylindrical skirt is used.

In different embodiments the connection between the cylindrical plating, the skirt and the conical plating is made by means of a "Y" shaped element.

The support element G is shaped in such a way as to support the reaction chamber at least along a circumferential area. The expansion of the walls of the main body 90 during the thermal operating cycles could lead to an accumulation of stresses at the above-mentioned support area since the support element, called "skirt", is outside the reaction chamber and is therefore not subject to the same thermal expansion because it is not in direct contact with the product to be treated at high temperature.

In order to prevent the formation of cracks in the above-mentioned support area, the main body 90 may comprise an annular connection element 50, positioned or which can be positioned between the lateral casing L and the base portion B.

Preferably, as shown in Figure 4, the annular connection element 50 is positioned at an end edge of the base portion B.

In particular, as shown in Figure 5, the annular connection element 50 has a "Y" shaped transversal cross-section.

Therefore, advantageously, as shown in the enlargement of Figure 5a, the support element G is coupled to a free end of the "Y" section, the function of the "Y" ring is to distance the welding of the skirt G from the connection zone of the plating with the cone, an area subject to high stress concentration due to the geometric shape of the zone itself, reducing the possible formation of cracks at the welds between the three elements plating/conical bottom/skirt.

Moreover, the "Y" shaped connection is generally formed from a forged ring or a ring obtained by calendering then machined by machine tools, allows a better control of the geometrical shape and the geometrical tolerances of the connection itself.

Depending on the specific production requirements and the volume of charge to be treated, the reaction chamber 100 will have more or less bulky dimensions. As the overall dimensions vary, the wall thickness of the main body 90 will also vary. The thickness of a stainless steel sheet used for the walls of the reaction chamber 100 according to the present invention calculated according to the formulas of known design standards for pressure vessels may be slightly greater (for example, about 10% greater) than the thickness of a plated sheet with a carbon steel base plate or low alloy steel base plate of known type, so that the structural strength values of the integral stainless steel sheet are still comparable to those of the plated sheet. Under the design temperature and pressure conditions generally adopted for plants of the type in question, the order of magnitude of the thickness of a ferritic stainless steel sheet could be between about 20-70 mm.

Even though, under the design conditions at which coke drums generally work, the wall thicknesses of integral (un-plated) stainless steel coke drums may be slightly greater than the thicknesses resulting from plated carbon or low-alloy steel sheets, it should be noted that under current market conditions the price of the construction material is very similar when comparing the two construction solutions, so that the price of the reaction chamber material (coke drums) is practically not increased compared to the price of the material of coke drums according to the prior art, due to technical improvements made by the use of integral stainless material (according to the invention).

The welded joints of the reaction chamber 100 are advantageously made of a nickel alloy, or the welding is carried out using stainless steel electrodes, in order to uniform the welded joints to the rest of the structure and avoid discontinuity of stresses due to the use of materials with a different expansion coefficient on the walls of the main body 90.

As mentioned above, the method of assembly of the reaction chamber 100 according to the invention avoids many of the non-destructive tests and machining which must be performed on the welding of plated sheets of known type.

Advantageously, the connections to the external pipes (openings) are also made of integral stainless steel and therefore do not require restoration of plated material (it should be noted that generally in the prior art the connections are also made of plated material and therefore material which needs restoration of plating material or the connections are obtained from forged material which needs a nickel alloy or stainless steel plating through the process of deposition of filler material as described above (electroslag, submerged arc or coated electrode or cored wire).

The method of assembling a reaction chamber 100 according to an embodiment of the invention comprising the steps of preparing a base portion B and a head portion S, as defined above, of a main body 90 of the reaction chamber 100. Advantageously, the method described here makes it possible to limit the operation of welding between sheets to only welding between stainless steel sheets, avoiding, as happens in current constructions, the restoration of anti-corrosion material after the welding of the carbon steel or low alloy steel material (generally a nickel alloy welding).

In particular, in the example described here, the assembly method also includes a step of preparation of a lateral casing L, the so-called plating, which is substantially cylindrical, and of joining of the lateral casing L between the base portion B and the head portion S. Advantageously, the joining of the casing L is carried out, for each junction edge, by means of a homogeneous welding line which avoids the restoration of anti-corrosive material as previously described.

Advantageously, each portion of the main body 90, for example, the base portion B, the head portion S and the lateral casing L (the so-called plating), is obtained by a welded joining operation of a plurality of substantially rectangular sheets 10 wherein each welded joint is made by a homogeneous welding line which avoids the restoration of anti-corrosion material as described previously

Preferably, the edges of the portions to be joined are machined for example by caulking to allow the filler material used for welding to be accommodated.

Advantageously, all the non-destructive testing and post-welding stress relief heat treatment operations which must be carried out to assemble plated sheets of known type formed from carbon or low alloy steel base plate are eliminated, allowing a reduction in manufacturing costs as well as manufacturing time.

As shown in the comparison between Figure 7a and Figure 7b, the method according to the invention makes it possible to significantly reduce the number of steps required to obtain edge welding.

Advantageously, since there is no plated material in the reaction chamber and in the assembly method described here, all the drawbacks linked to the presence of the plated material and to the materials used to restore the plated material are eliminated.

A further advantage of the use of integral material and the absence of the plating with base plate made of carbon steel or low alloy steel or is that the heat treatments which in the prior art must be carried out at the end of the assembly to relieve stresses are also eliminated, and these heat treatments can be very lengthy, even lasting several days.

In addition, as mentioned above, the use of integral material, and in particular stainless steel, makes it possible to significantly reduce the construction time from 15-20 months (order of magnitude related to the current 2019 delivery time of plated sheets and the workload of the manufacturer) for reaction chambers of known type (which include plated sheets) to about 12 months or less (order of magnitude related to the current 2019 delivery time of the plated sheets and the workload of the manufacturer) for reaction chambers according to the invention.

For this reason, advantageously, according to the invention, the welding operations are carried out faster than the welding of plated sheets and the manufacturing method, which is also the object of the invention, makes it possible to minimise not only the reaction chamber manufacturing time but also the plant downtimes required to carry out maintenance and/or repair operations of the chamber.

In fact, the reaction chambers working generally in creep and fatigue mode continuously even for several months are subject to the occurrence of cracks on the base material and these cracks are subject to propagation within the same material, and must therefore be repaired by sealing by welding with filler material; this operation can only be carried out during plant downtime and requires a long times also because of the subsequent heat treatment for post-welding stress relief repair which is no longer necessary according to the invention.

This invention is described by way of example only, without limiting the scope of application, according to its preferred embodiments, but it shall be understood that the invention may be modified and/or adapted by experts in the field without thereby departing from the scope of the inventive concept, as defined in the claims herein.

## Claims

1. Reaction chamber (100) configured to house coking reactions comprising:
a main body (90) having a base portion (B) and a head portion (S), wherein said base portion (B) has a conical conformation for conveying the reaction products and wherein said head portion (S) has a substantially cylindrical conformation delimited at the top by a closing cap, said base portion (B) and said head portion (S) being jointed to each other by a plurality of welded joints at respective junction edges,
**characterized in that** said portions of said main body (90) are made of stainless steel in such a way as to allow a junction between sheets forming the three aforementioned portions and the junction between said portions by means of a single welded junction line, so avoiding the plating restoration operation required for clad sheet metal not **characterized by** carbon and/or low alloy steel metal sheet.

2. Reaction chamber (100) according to the preceding claim, wherein said stainless steel comprises a balanced percentage of ferritic steel wherein the remaining percentage is austenitic steel.

3. Reaction chamber (100) according to any one of the preceding claims, wherein said main body (90) comprises a substantially cylindrical lateral casing (L), positioned between said base portion (B) and said head portion (S), said lateral casing (L) being shaped in a substantially cylindrical shape and being joined to both said base portion (B) and said head portion (S), by means of a respective welding line.

4. Reaction chamber (100) according to any one of the preceding claims, wherein said lateral casing (L), and/or said base portion (B), and/or said head portion (S), comprises a plurality of substantially rectangular sheets (10), said sheets (10) being joined together by means of a respective welding line at each edge line.

5. Reaction chamber (100) according to the preceding claim, wherein two consecutive sheets (10) are laterally aligned with each other.

6. Reaction chamber (100) according to the preceding claim, wherein the connections with the external pipes and the connections for the instrumentation are made of stainless steel.

7. Reaction chamber (100) according to one of claims 4 or 5, wherein two consecutive sheets (10) are longitudinally offset from each other.

8. Reaction chamber (100) according to any one of the preceding claims, comprising an annular element (30), positioned or positionable between said lateral casing (L) and said head portion (S).

9. Reaction chamber (100) according to any one of the preceding claims, comprising an annular connection element (50), positioned or positionable between said lateral casing (L) and said base portion (B).

10. Reaction chamber (100) according to the preceding claim, wherein said annular connection element (50) has a Y-shaped cross section.

11. Assembling method for assembling a reaction chamber (100) according to any one of claims 1 to 9, comprising the steps of:
- providing a base portion (B) of a main body (90) of said reaction chamber (100), said base portion (B) having a conical conformation for conveying reaction products;
- preparing a head portion (S), having a substantially cylindrical conformation delimited at the top by a closing cap;
- joining an ending edge of said base portion (B) to an ending edge of said head portion (S), wherein said joining operation is carried out by welding the stainless steel base sheet, no plating being placed on the sheet.

12. The method according to the preceding claim, comprising a step of providing a substantially cylindrical lateral casing (L) and joining said lateral casing (L) between said base portion (B) and said head portion (S), wherein said joining operation is carried out, for each junction edge, by welding the stainless steel metal sheet, no plating being placed on the sheet.

13. Method according to any one of claims 10 or 11, wherein said base portion (B), and/or said head portion (S), and/or said lateral casing (L), is obtained by a junction operation of a plurality of substantially rectangular plates (10), said sheets (10) being joined together by welding of the single base sheet, no plating being placed on the sheet.

14. Method according to any one of the claims from 10 to 12, wherein said single welding line is made using, as welding material, the same material used to make the chamber.

15. Method according to any one of the claims from 10 to 12, wherein said single welding line is carried out using a nickel alloy as welding material.

16. A method according to any one of claims from 10 to 12, wherein the welds of the connections to the external pipes are performed using the same material used to make the chamber as the filler material.

17. Method according to any of the claims from 10 to 12, in which the welds of the connections to the external pipes are carried out using, as welding material, the same material used to make the connection.
